# FASCICULE DE BREVET EUROPEEN

(11) **EP 1 102 452 B1**
(45) Date de publication et mention de la délivrance du brevet: **17.01.2007**
(21) Numéro de dépôt: 00403201.7
(22) Date de dépôt: 16.11.2000
(51) Int. Cl.: H04L 29/06

(54) **Procédé de validation du provisionnement primaire d'un terminal**
Freigabeverfahren für die erste Bereitstellung eines Endgerätes
Primary provisioning of a validation procedure for a terminal

(30) Priorité: 22.11.1999 FR 9914636
(43) Date de publication de la demande: 23.05.2001
(73) Titulaire: ALCATEL, 75008 Paris (FR)
(72) Inventeur: Helaine, Hubert, Woodley Reading, Berkshire RG5 4UH (GB); Bury, Sébastien, 75002 Paris (FR)
(74) Mandataire: Lamoureux, Bernard

(56) Documents cités:
- EP-A- 0 889 660
- EP-A- 0 944 203
- EP-A- 0 951 191
- WO-A-99/07173
- US-A- 5 371 794
- "DIGITAL CELLULAR TELECOMMUNICATIONS SYSTEM (PHASE 2+);MOBILE STATION EXECUTION ENVIRONMENT (MExE); SERVICE DESCRIPTION; Stage 1 (GSM 02.57 version 7.1.0 Release 1998) ETSI TS 101 741 v7.1.0" EUROPEAN TELECOMMUNICATION STANDARD, août 1999 (1999-08), pages 1-21, XP002145174

## Description

La présente invention concerne l'établissement de connexions à un réseau du type Internet pour des terminaux, notamment mobiles, et plus particulièrement l'authentification des données de provisionnement nécessaires à l'établissement d'une connexion.

De façon bien connue, l'établissement de connexions à travers un réseau tel que le réseau Internet implique l'allocation d'une adresse sur le réseau. L'allocation d'adresse est pour la plupart des utilisateurs une allocation d'adresse dynamique, effectuée par un fournisseur d'accès auprès duquel l'utilisateur est référencé. On appelle provisionnement primaire, ou provisionnement des données primaires, l'étape de fourniture à un utilisateur des données permettant d'établir une première connexion à un fournisseur d'accès. Ces données comprennent tous les paramètres de toutes les couches nécessaires à la connexion au fournisseur d'accès, et par exemple le numéro de téléphone, le support de transmission utilisé, une identification d'utilisateur, un mot de passe etc. Dans le cas de connexions à un fournisseur d'accès à l'aide d'un ordinateur, le provisionnement primaire s'effectue souvent en fournissant à l'utilisateur un cédérom contenant les données de provisionnement, avec une adresse temporaire. Il est aussi connu de fournir les données de provisionnement primaire par courrier; les données sont alors recopiées par l'utilisateur à l'invite, à l'aide d'un logiciel approprié.

Apparaissent actuellement des terminaux mobiles, qui ont aussi une fonction de terminal pour réseau de téléphonie. Pour ces terminaux se pose le problème du provisionnement primaire, étant entendu que les solutions connues pour les ordinateurs ou des postes fixes peuvent difficilement être transposées.

Il est aussi connu d'utiliser pour l'identification ou la vérification de l'intégrité de messages des algorithmes asymétriques; un tel algorithme asymétrique utilise une clé publique, et une clé privée, et peut notamment être utilisé pour l'identification sur le réseau Internet. Un utilisateur se voit affecter une clé privée, et une clé publique est diffusée et certifiée par un organisateur, pour cet utilisateur. La connaissance de la clé publique ne permet pas de retrouver la clef privée, en revanche, la connaissance de la clé publique permet de vérifier une signature par la clef privée. RSA est un exemple connu d'algorithme asymétrique. Un tel algorithme ne s'applique pas au provisionnement primaire, car une clé publique n'a de valeur pour la certification ou l'authentification que dans la mesure où elle émane d'une autorité qui peut la certifier. Le provisionnement primaire est une situation dans laquelle une telle autorité n'existe pas encore.

Le document EP 944 203 décrit l'envoi d'une clé de sécurité et de données d'authentification à un terminal.

Il a été proposé d'utiliser une clé introduite dans le terminal lors de la fabrication, lors de l'achat, ou une clé fournie dans un module externe du genre carte à puce. Ces solutions ne sont pas satisfaisantes. De fait, pour les deux premières, la clé peut changer après la fabrication ou la vente du terminal, par exemple dans le cas où l'utilisateur contracte un abonnement auprès d'un nouveau fournisseur d'accès; par ailleurs, le propriétaire du domaine, destinataire des données de provisionnement, peut être différent du propriétaire du terminal. Pour la troisième solution se pose le problème du coût de la carte à puce; en outre, le propriétaire du domaine peut être différent du propriétaire de la carte à puce du terminal.

Le document EP 889660 décrit l'authentification d'un terminal par un point d'accès.

La norme ETSI/SMG4/MExE propose une procédure manuelle de provisionnement d'un premier certificat vers un terminal mobile. Le certificat est un certificat spécial d'administrateur du terminal. La procédure proposée dans cette norme est la suivante. Le terminal mobile et l'entité de provisionnement établissent un premier contact. L'utilisateur initie sur le terminal une requête de certificat de provisionnement primaire. L'entité de provisionnement envoie le certificat de provisionnement primaire, dans un paquet signé; comme on vient de l'expliquer, le terminal ne peut pas vérifier la signature du paquet reçu, du fait de l'absence d'une clef publique authentifiée. Le terminal calcule et affiche donc la signature du paquet reçu, et invite l'utilisateur à valider la signature. L'utilisateur établit un contact distinct avec l'entité de provisionnement, par courrier, téléphone ou toute autre liaison sûre, et obtient de la part de l'entité de provisionnement la signature qui devrait être affichée sur le terminal. L'utilisateur valide sur le terminal la signature proposée, s'il s'avère que la signature proposée par ailleurs par l'entité de provisionnement est identique. La validation sur le terminal équivaut à une authentification du certificat reçu.

Cette procédure présente l'inconvénient suivant. L'utilisateur peut valider la signature proposée sur le terminal, soit par inadvertance, soit par erreur, même si elle diffère de la signature proposée par ailleurs par l'entité de provisionnement.

L'invention propose une solution au problème de l'authentification du provisionnement primaire pour les terminaux mobiles. Elle permet un provisionnement des données primaires, qui est simple pour l'utilisateur, et qui évite toute validation intempestive.

Plus précisément, l'invention propose un procédé de validation de données envoyées par une source à un terminal sur un médium, comprenant les étapes de:
- envoi de données par la source au terminal, sur le dit médium;
- calcul d'une signature dans le terminal;
- affichage sur le terminal d'une invite d'entrée d'une signature ;
- réception sur le terminal d'une signature entrée par l'utilisateur du terminal;
- comparaison dans le terminal de la signature calculée et de la signature entrée par l'utilisateur, et
- validation des données en fonction des résultats de l'étape de comparaison.Dans un mode de réalisation, les données sont un certificat contenant une clé publique d'authentification. Dans ce cas, il est avantageux que la clé publique d'authentification soit la clé publique de la dite source.

Dans un autre mode de réalisation, l'étape de calcul d'une signature s'effectue par hachage.

De préférence, les données sont des données de provisionnement primaire. Il peut aussi s'agir de données de provisionnement d'application.

Dans encore un mode de réalisation, le procédé comprend les étapes de:
- calcul d'une signature dans la source à partir des données envoyées ;
- envoi de la signature à l'utilisateur du terminal par un autre médium.

D'autres caractéristiques et avantages de l'invention apparaîtront à la lecture de la description qui suit de modes de réalisation de l'invention, donnés à titre d'exemple, et en référence aux dessins annexés, qui montrent:
- figure 1, un schéma d'un terminal mobile et d'une source de données;
- figure 2, un ordinogramme du procédé de l'invention.

Pour l'authentification des données, l'invention propose, au lieu d'afficher les données à comparer en demandant une simple validation par l'utilisateur, de demander à l'utilisateur d'entrer les données à comparer. L'entrée effective par l'utilisateur des données à comparer, ou d'une information représentative de ces données, permet au terminal d'effectuer la comparaison. L'invention évite toute validation intempestive des données, et assure que la certification se déroule correctement. L'invention permet aussi une certification à l'initiative de la source, et non plus seulement à l'initiative de l'utilisateur.

Dans la suite de la description, l'invention est décrite en référence à un exemple. Le terminal est un terminal mobile, la source est un fournisseur d'accès, et les données sont des données de provisionnement primaire.

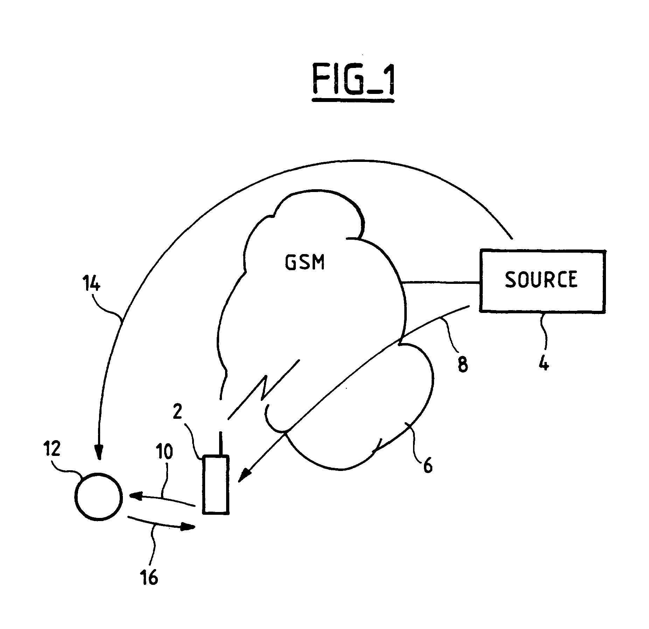

La figure 1 montre un schéma du terminal mobile et d'une source de données. On a porté à la figure le terminal mobile 2, et une source de données 4. Cette source de données est dans l'exemple un fournisseur d'accès au réseau Internet. Le terminal mobile et la source de données peuvent communiquer à travers un réseau de télécommunication 6, par exemple un réseau du type GSM.

Comme indiqué plus haut, l'invention s'applique à l'authentification de données provenant de la source, et envoyés vers le terminal mobile. Ces données peuvent être des données de provisionnement primaire, ou simplement un certificat pour l'authentification de données de provisionnement primaire envoyées ultérieurement. Ces données sont en tout état de cause élaborées dans la source, et sont envoyées vers le terminal mobile.

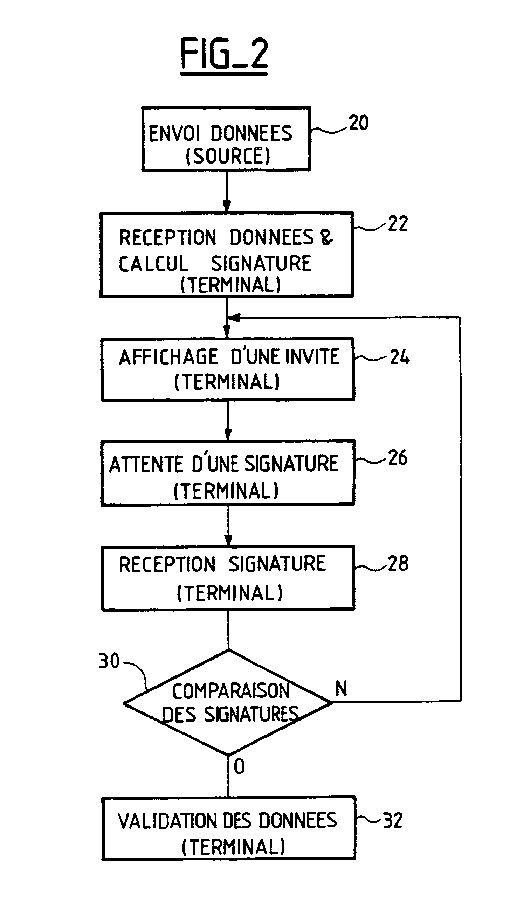

La flèche 8 sur la figure symbolise l'envoi des données depuis la source 4 vers le terminal 2, à travers le réseau GSM. Ces données peuvent être envoyées à l'initiative de la source, ou encore sur requête du terminal. Dans le premier cas, les données de provisionnement peuvent être envoyées à l'initiative de la source, sans que le terminal ne sollicite l'envoi des données. Dans le dernier cas, l'utilisateur peut initier comme dans la procédure MExE mentionnée plus haut une requête pour obtenir un certificat de provisionnement; la requête est reçue par la source, et les données sont émises. Cette étape est référencée 20 sur la figure 2

Les données sont reçues par le terminal 2, et sont traitées par le terminal pour calculer une signature. On entend par "calcul d'une signature" toute fonction permettant d'associer aux données reçues une signature, c'est-à-dire un nombre ou une chaîne alphanumérique d'une longueur généralement plus réduite que les données; la fonction est injective, ou à tout le moins, la probabilité que des données distinctes aient une même signature est faible. La signature au sens de cette définition couvre une signature au sens classique du terme, nécessitant une clé, comme une simple empreinte obtenue par hachage. Dans le mode de réalisation le plus simple, la signature est transmise directement par la source, et l'étape de calcul consiste à isoler cette signature dans les données.

Pour le calcul de la signature, on peut utiliser une fonction de hachage, et par exemple celle des algorithmes SHA-1, MD5 ou MD2. L'algorithme de hachage SHA-1 fournit en sortie une empreinte de 20 octets. On peut utiliser un algorithme de signature à base de clé, comme l'algorithme RSA ECDSA. On peut aussi combiner un hachage et le calcul d'une signature sur l'empreinte obtenue par hachage; cette solution diminue le temps de calcul, du fait du volume plus réduit des données. Cette étape de réception des données et de calcul de signature, référencée 22 dans l'ordinogramme de la figure 2, suit l'étape 20 d'envoi des données par la source.

Après calcul de la signature, le terminal 2 affiche une invite à destination de l'utilisateur 12, pour que l'utilisateur entre dans le terminal une signature. Dans le cas d'un terminal mobile classique, muni d'un écran et d'un clavier, le terme "affiche" correspond à l'impression sur l'écran d'un message d'invite, qui indique à l'utilisateur qu'il faut entrer une signature. Cette invite peut aussi être affichée par un signal sonore, ou tout autre moyen. Cet affichage d'une invite à l'utilisateur est symbolisé sur la figure 1 par la flèche 10, et correspond sur l'ordinogramme de la figure 2 à l'étape 24, qui suit l'étape 22.

Le terminal attend ensuite l'entrée par l'utilisateur d'une signature, comme indiqué sur l'ordinogramme de la figure 2 par l'étape 26. Cette étape peut être limitée dans le temps; le terminal peut aussi proposer à l'utilisateur d'interrompre le procédé de validation; ceci n'est pas représenté sur la figure 2. Dans un cas comme dans l'autre, la validation peut être reprise ultérieurement à l'initiative de la source. On peut aussi prévoir, comme dans la procédure manuelle décrite dans la norme MExE une validation à l'initiative de l'utilisateur; toutefois, à l'inverse de cette solution, l'invention rend possible une validation à l'initiative de la source.

Dans le diagramme de la figure 1, la flèche 14 montre la réception d'une signature par l'utilisateur, depuis la source, et par l'intermédiaire d'un autre médium. On entend ici par autre médium, comme dans la procédure MExE toute voie de communication entre la source et l'utilisateur qui soit considérée comme fiable. Il peut s'agir d'un courrier, d'une transmission par téléphone, ou autre. La signature ainsi fournie par la source est une signature calculée à partir des données transmises vers le terminal, connaissant la fonction de calcul de la signature mise en oeuvre dans le terminal. On peut aussi pour fournir la signature à l'utilisateur utiliser un tiers autre que la source, avec qui l'utilisateur a établi une relation fiable.

L'utilisateur, après s'être procuré auprès de la source ou du tiers la signature attendue par le terminal, rentre cette signature dans le terminal. Dans le cas le plus simple, cette entrée s'effectue grâce au clavier du terminal, mais d'autres solutions sont possibles, en fonction du dispositif d'entrée de données dont dispose le terminal. Cette entrée de données est symbolisée par la flèche 16 sur la figure 1. Sur la figure 2, l'étape 28, qui suit l'étape 26 correspond à la réception des données.

Le terminal, après avoir reçu la signature entrée par l'utilisateur, compare la signature calculée à partir des données reçues depuis la source et la signature entrée par l'utilisateur; ceci apparaît dans l'ordinogramme de la figure 2 à l'étape de comparaison 30. Dans le cas le plus simple, la signature fournie à l'utilisateur par l'autre médium est identique à la signature calculée par le terminal. Il est aussi possible que la signature fournie à l'utilisateur par la source ou le tiers ne soit pas identique à la signature calculée: autrement dit la fonction de comparaison mise en oeuvre dans le terminal ne se réduit pas nécessairement à une comparaison terme à terme, mais peut inclure des calculs sur la signature introduite par l'utilisateur. Dans tous les cas, il convient de remarquer que selon l'invention une simple validation par l'utilisateur ne suffit pas pour valider les données reçues depuis la source. La comparaison par le terminal permet au terminal de déterminer si la signature calculée à partir des données reçues depuis la source correspond à la signature entrée par l'utilisateur. Si tel est le cas, le terminal conclut que les données sont valides, comme indiqué à l'étape 32 de l'ordinogramme de la figure 2. Si tel n'est pas le cas, le terminal peut afficher une nouvelle invite, c'est-à-dire comme représenté sur la figure 2, repasser à l'étape 24. On peut aussi interrompre le procédé de validation, ou limiter le nombre d'essai d'introduction de signature.

Bien entendu, l'invention n'est pas limitée aux modes de réalisation préférés décrits plus haut. Elle s'applique à d'autres types de terminaux, pour d'autres types de données, et pour d'autres algorithmes d'authentification. On pourrait ainsi utiliser aussi bien l'invention pour authentifier des clés d'un algorithme symétrique.
L'invention a été décrite dans le cas particulier des données de provisionnement primaire; on pourrait encore utiliser l'invention pour le provisionnement de données d'application. Par exemple, dans une application bancaire, on pourrait utiliser l'invention pour valider la transmission d'un numéro de client ou de compte, d'un mot de passe, d'options d'applications, etc.

Dans tous les cas, l'invention permet de valider les données transmises par la source, en évitant une validation intempestive par simple acquiescement de l'utilisateur.

## Revendications

1. Procédé de validation de données envoyées par une source (4) à un terminal (2) sur un médium (6), comprenant les étapes de:
- envoi (20) de données par la source au terminal, sur le dit médium ;
- calcul (22) d'une signature dans le terminal à partir des données envoyées par la source ;
**caractérisé en ce que** le procédé comprend aussi les étapes de :
- affichage (24) sur le terminal d'une invite d'entrée d'une signature ;
- réception (28) sur le terminal d'une signature entrée par l'utilisateur du terminal, cette signature ayant été reçue par l'utilisateur par l'intermédiaire d'un autre médium;
- comparaison (30) dans le terminal de la signature calculée et de la signature entrée par l'utilisateur, et
- validation (32) des données en fonction des résultats de l'étape de comparaison.

2. Le procédé de la revendication 1, **caractérisé en ce que** les données sont un certificat contenant une clé publique d'authentification.

3. Le procédé de la revendication 2, **caractérisé en ce que** la clé publique d'authentification est la clé publique de la dite source.

4. Le procédé de la revendication 1, 2 ou 3, **caractérisé en ce que** l'étape de calcul d'une signature s'effectue par hachage.

5. Le procédé de l'une des revendications 1 à 4, **caractérisée en ce que** les données sont des données de provisionnement primaire.

6. Le procédé de l'une des revendications 1 à 4, **caractérisée en ce que** les données sont des données de provisionnement d'application.

7. Le procédé de l'une des revendications 1 à 6, **caractérisé par** l'étape d'envoi de la signature à l'utilisateur du terminal par la source par l'intermédiaire d'un autre médium.

## Claims

1. Method of validating data sent over a medium (6) by a source (4) to a terminal (2), the method comprising the steps of:
· sending (20) data over said medium by the source to the terminal;
. calculating (22) a signature in the terminal from the data sent by the source;
**characterised in that** the method also comprises the steps of:
· displaying (24), on the terminal, a prompt inviting input of a signature;
· receiving (28), by the terminal, a signature input by the user of the terminal, this signature having been received by the user via another medium;
· comparing (30), in the terminal, the calculated signature and the signature input by the user; and
· validating (32) data as a function of the results of the comparison step.

2. Method of claim 1, **characterized in that** the data is a certificate containing an authenticating public key.

3. Method of claim 2, **characterized in that** the authenticating public key is the public key of said source.

4. Method of claim 1, 2, or 3, **characterized in that** the step of calculating a signature is performed by hashing.

5. Method of any one of claims 1 to 4, **characterized in that** the data is primary provisioning data.

6. Method of any one of claims 1 to 4, **characterized in that** the data is application provisioning data.

7. Method of any one of claims 1 to 6, **characterized by** the step of sending the signature to the user of the terminal by the source via another medium.

## Patentansprüche

1. Freigabeverfahren für Daten, die von einer Quelle (4) an ein Endgerät (2) auf einem Medium (6) gesendet werden, umfassend die Schritte:
- des Sendens (20) von Daten durch die Quelle an das Endgerät auf dem Medium;
- der Berechnung (22) einer Signatur in dem Endgerät anhand der von der Quelle gesendeten Daten;
**dadurch gekennzeichnet, dass** das Verfahren auch die Schritte umfasst
- der Anzeige (24) einer Eingabeaufforderung für eine Signatur auf dem Endgerät;
- des Empfangs (28) einer vom Benutzer des Endgerätes eingegebenen Signatur auf dem Endgerät, wobei diese Signatur vom Benutzer über ein anderes Medium empfangen wurde;
- des Vergleichs (30) der berechneten Signatur und der vom Benutzer eingegebenen Signatur im Endgerät; und
- der Freigabe (32) der Daten in Abhängigkeit von den Ergebnissen des Vergleichsschritts.

2. Verfahren nach Anspruch 1, **dadurch gekennzeichnet, dass** die Daten ein Zertifikat sind, das einen öffentlichen Authentifizierungsschlüssel enthält.

3. Verfahren nach Anspruch 2, **dadurch gekennzeichnet, dass** der öffentliche Authentifizierungsschlüssel der öffentliche Schlüssel der Quelle ist.

4. Verfahren nach Anspruch 1, 2 oder 3, **dadurch gekennzeichnet, dass** der Berechnungsschritt einer Signatur durch eine Hash-Funktion erfolgt.

5. Verfahren nach Anspruch 1 bis 4, **dadurch gekennzeichnet, dass** die Daten Daten der ersten Bereitstellung sind.

6. Verfahren nach Anspruch 1 bis 4, **dadurch gekennzeichnet, dass** die Daten Daten einer Anwendungsbereitstellung sind.

7. Verfahren nach Anspruch 1 bis 6, **gekennzeichnet durch** den Schritt des Sendens der Signatur an den Benutzer des Endgerätes **durch** ein anderes Medium.
